# EUROPEAN PATENT APPLICATION

(11) **EP 1 916 278 A1**
(43) Date of publication of application: **30.04.2008**
(21) Application number: 06796385.0
(22) Date of filing: 11.08.2006
(51) Int. Cl.: C08L 77/00, C08J 5/00, C08K 3/22, C08L 71/10

(54) **POLYAMIDE RESIN COMPOSITION FOR LASER MARKING AND LASER-MARKED POLYAMIDE RESIN MOLDINGS**

(30) Priority: 18.08.2005 JP 2005237919
(71) Applicant: MITSUBISHI ENGINEERING-PLASTICS CORPORATION, Tokyo 104-0031 (JP)
(72) Inventor: TSUNODA, Morio, 5-chome, Hiratsuka-shi, Kanagawa, 254-0016 (JP); YAMANAKA, Yasushi, 5-chome, Hiratsuka-shi, Kanagawa, 254-0016 (JP); SUZUKI, Masami, 5-chome, Hiratsuka-shi, Kanagawa, 254-0016 (JP)
(74) Representative: HOFFMANN EITLE
(86) International application number: PCT/JP2006/315947
(87) International publication number: WO 2007/020892

(57) **Abstract**

There is provided a polyamide resin composition capable of not only maintaining inherent properties of polyamide resins including moldability, mechanical properties, thermal stability, heat resistance and electrical properties but also exhibiting a good flame retardance and an excellent laser marking property, as well as a resin molded product for laser marking which is molded from the composition. The polyamide resin composition for laser marking according to the present invention includes 100 parts by weight of a polyamide resin and 0.1 to 100 parts by weight of a halogen-containing organic compound and/or an antimony compound, wherein when subjecting a molded product obtained from the composition to laser marking, a color tone of a laser-marked portion of the molded product exhibits a darker color than that of a surface of a laser-non-irradiated portion of the molded product.

## Description

### TECHNICAL FIELD

The present invention relates to a polyamide resin composition for laser marking and a laser-marked polyamide resin molded product. The term "laser marking" used herein means such a technique for forming clear markings such as characters, symbols and figures on a surface to be marked by irradiation with a laser light.

### BACKGROUND ART

Polyamide resins have been extensively used as resin molded products in various applications such as, for example, automobile parts, electric and electronic parts and various mechanical structural parts because of excellent properties including mechanical properties, thermal stability, heat resistance and electrical properties thereof. Also, in general, the resin molded products are provided on a surface thereof with markings such as characters, symbols, patterns and pictures according to various applications thereof. As the method of forming these markings, there are known a recording method such as padding and silk printing as well as a method of attaching a seal on which necessary marks such as characters, symbols, patterns and pictures are previously printed.

However, the recording method has problems such as defective printing due to scattering of a recording solution, difficulty in printing on irregular surface portions and difficulty in printing fine characters thereon, whereas the seal-attaching method has such a limitation that the surface to be marked must be flat. For these reasons, in recent years, laser marking has been noticed as the method of solving the above problems mainly for polyester-based resin molded products.

The laser marking is a technique capable of marking at a high speed with a good reproducibility irrespective of surface conditions of products to be marked, and is, therefore, an extremely useful method. However, the laser marking technique is not necessarily applicable to all of single resin materials. Therefore, there have been generally proposed methods of enhancing laser marking properties by improving resins themselves or various additives. Conventionally, as the resin composition for laser marking, as described above, studies have been made mainly on those compositions for polyester resins.

For example, the laser marking techniques in the prior arts are classified into the following methods (A) to (D). Thus, various improved methods for laser marking have been conventionally proposed.
(A) Method of utilizing the change in surface condition of a resin molded product owing to foaming of a raw resin material (Japanese Patent Publication (KOKOKU) No. 2-47314).
(B) Method of utilizing decoloring or discoloration of pigments or dyes at portions irradiated with a laser (Japanese Patent Application Laid-open (TOKUHYO) No. 2001-505233 and Japanese Patent Publication (KOKOKU) No. 56-144995).
(C) Method of utilizing etching on a surface of resin molded products by irradiation with a laser (Japanese Patent Publication (KOKOKU) No. 61-11771 and Japanese Patent Application Laid-open (KOKAI) No. 4-246456).
(D) Method of utilizing change in surface conditions, such as carbonization, at portions irradiated with a laser (Japanese Patent Application Laid-open (KOKAI) No. 05-96386).

In addition, in recent years, there have also been proposed various methods for improving laser marking properties of polyamide resins (Japanese Patent Application Laid-open (KOKAI) Nos. 10-067862 and 11-228813).

### DISCLOSURE OF THE INVENTION

### Problem to be Solved by the Invention

Meanwhile, in the technique of the above method (D), it is described that the higher the limiting oxygen index, the clearer the laser marking can be produced (Japanese Patent Application Laid-open (KOKAI) No. 05-96386 (1993)). This technique is considered to be based on the following technical concept. That is, the limiting oxygen index means a percentage of oxygen in an atmosphere required for combustion of a substance. Since the percentage of oxygen in air is about 21%, the substance having a limiting oxygen index of more than 21% is hardly burn in air and readily carbonized and, therefore, has a good laser marking property.

On the other hand, the polyamide resins, in particular, aliphatic polyamide resins such as typically polyamide 6 and polyamide 66, inherently exhibit a high moisture absorption and are usually present in the form of a moisture-absorbed state in an atmospheric air. Therefore, the limiting oxygen index of the moisture-absorbed polyamide resins exceeds 22% by themselves. However, even not only polyamide resins in an absolute dry state, but also the moisture-absorbed polyamide resins having a limiting oxygen index of more than 22% and even polyamide resin compositions containing a flame retardant such as melamine cyanurate which have a limiting oxygen index of more than 30% have still failed to attain a clear laser marking property.

In the method of blending a boric anhydride in polyamide resins (Japanese Patent Application Laid-open (KOKAI) No. 10-067862 (1998)), there tends to arise such a problem that the polyamide resins having an extremely low acid resistance suffer from promoted decomposition and are therefore deteriorated in inherent excellent mechanical properties and thermal stability. In the method of blending red phosphorus together with carbon black and/or titanium black in polyamide resins (Japanese Patent Application Laid-open (KOKAI) No. 11-228813 (1999)), there tends to arise such a problem that the color tone of the resultant polyamide composition is limited only to a dark-based color (dark to black color).

Meanwhile, in the above prior arts relating to polyamide resins (Japanese Patent Application Laid-open (KOKAI) Nos. 10-067862 (1998) and 11-228813 (1999)), there has also been proposed the method of blending antimony trioxide together with a phosphorus-based flame retardant in the polyamide resins. However, in these prior arts, the relationship between a laser marking property of the polyamide resin composition and the flame retardant such as antimony trioxide is neither described nor suggested.

An object of the present invention is to provide a polyamide resin composition capable of not only maintaining inherent properties of polyamide resins including moldability, mechanical properties, thermal stability, heat resistance and electrical properties but also exhibiting a good flame retardance and an excellent laser marking property, as well as a resin molded product for laser marking which is molded from the composition.

### Means for Solving Problem

As a result of the present inventors' earnest study for solving the above conventional problems, it has been unexpectedly found that the above object can be achieved by such a polyamide resin composition containing a halogen-containing organic compound and/or an antimony compound in a specific amount. Further, it has been found that the above polyamide resin composition is capable of performing a good laser marking even without blending a colorant used in ordinary laser marking applications such as carbon black therein, and suitably used as a polyamide resin composition for laser marking which is applicable to resin molded products having extensive color tones.

The present invention has been attained on the basis of the above findings. In a first aspect of the present invention, there is provided a polyamide resin composition for laser marking which comprises 100 parts by weight of a polyamide resin and 0.1 to 100 parts by weight of a halogen-containing organic compound and/or an antimony compound, wherein when subjecting a molded product obtained from the composition to laser marking, a color tone of a laser-marked portion of the molded product exhibits a darker color than that of a surface of a laser-unirradiated portion of the molded product. In a second aspect of the present invention, there is provided a polyamide resin molded product obtained by molding the above polyamide resin composition for laser marking on which laser markings are provided by irradiating the molded product with a laser.

### EFFECT OF THE INVENTION

In accordance with the present invention, it is possible to provide a polyamide resin composition capable of not only maintaining inherent properties of polyamide resins including moldability, mechanical properties, thermal stability, heat resistance and electrical properties but also exhibiting a good flame retardance and an excellent laser marking property, as well as a resin molded product for laser marking which is obtained by molding the composition. In addition, the polyamide resin composition of the present invention is applicable to products having extensive color tones since it is not required to incorporate thereinto a colorant such as carbon black as an essential component.

### PREFERRED EMBODIMENT FOR CARRYING OUT THE INVENTION

The present invention is described in detail below. Examples of the polyamide resin used in the present invention include 3- or more membered lactams and polyamides obtained by polycondensation between a polymerizable ω-amino acid or a dibasic acid and a diamine. Specific examples of the polyamide resin include polymers of ε-caprolactam, aminocaproic acid, enanthlactam, 7-aminoheptanoic acid, 11-aminodecanoic acid, 9-aminononanoic acid, α-pyrrolidone, α-piperidone, etc.; polymers obtained by polycondensation between a diamine such as hexamethylenediamine, nonamethylenediamine, undecamethylenediamine, dodecamethylenediamine and m-xylylenediamine, and a dicarboxylic acid such as terephthalic acid, isophthalic acid, adipic acid, sebacic acid, dodecane-dibasic acid and glutaric acid; or copolymers thereof. Further specific examples of the polyamide resin include nylons 4, 6, 7, 8, 11, 12, 6.6, 6.9, 6.10, 6.11, 6.12, 6T, 6/6.6, 6/12, 6/6T, 6T/6I, MXD6, etc. These polyamide resins may be used in the form of a mixture prepared by mixing a plurality of the polyamide resins at an optional ratio, and terminal ends of the polyamide resins may be sealed with a carboxylic acid or an amino compound, which is also effective to control a molecular weight thereof.

Among these polyamide resins, from the viewpoints of a laser marking property, mechanical properties, moldability and electrical properties (such as tracking resistance, arc resistance and insulating property after arc discharge), preferred are aliphatic polyamide resins containing polyamide 6 or polyamide 66 as a main constitutional unit. Specific examples of the aliphatic polyamide resins include copolymers of polyamide 6, polyamide 66, polyamide 6/66 and polyamide 66/6, etc.

The polymerization degree (viscosity) of the polyamide resin used in the present invention may be appropriately determined. However, when the viscosity of the polyamide resin is too low, the polyamide resin tends to be deteriorated in mechanical strength and toughness, resulting in problems upon use. On the contrary, when the polyamide resin is too high, the polyamide resin tends to be deteriorated in laser marking property, and further it may be difficult to produce a thin-wall molded product therefrom. From these viewpoints, the viscosity of the polyamide resin is usually 70 to 190 mL/g and preferably 72 to 150 mL/g as measured at its concentration of 1% by weight in a 96 wt% sulfuric acid at 23°C.

The halogen-containing organic compound used in the present invention is not particularly limited, and any conventionally known organic compounds may be optionally used as long as the organic compounds contain a halogen in a molecule thereof. Specific examples of the halogen-containing organic compound include chlorine-containing organic compounds such as chlorinated polyethylene, chlorinated paraffin, tris(chloroethyl)phosphate and perchlorocyclopentadecane; and bromine-containing organic compounds such as pentabromotoluene, tetrabromobisphenol S, tris(2,3-dibromopropyl)isocyanurate, octabromodiphenyl ether, hexabromobenzene, hexabromocyclododecane, ethylenebispentabromodiphenyl, ethylenebistetrabromophthalimide, brominated polyethylene, polydibromophenylene ether, bis(2,3,6-tribromophenoxy)ethane, tribromoneopentyl alcohol, tribromophenyl ally ether, tris(tribromoneopentyl)phosphate, tetrarbromobisphenol A, di(dibromophenol) glycidyl ether, brominated aromatic triazine-based compounds, tribromophenol, pentabromobenzyl polyacrylate, tetrabromobisphenol A-type epoxy resins and brominated polystyrene.

Also, the above halogen-containing organic compound may contain two or more halogen elements selected from chlorine, bromine and iodine at an optional ratio. In particular, in view of remarkable effect of improving a laser marking property, the halogen-containing organic compound preferably contain a bromine atom in an amount of not less than 50% by weight on the basis of a total amount of halogen atoms contained therein.

In addition, from the viewpoint of improving a thermal stability of the polyamide resin composition of the present invention, the halogen-containing organic compound preferably exhibits a 5 wt% thermal weight reduction (thermogravimetric decrease) temperature of higher than 300°C (Tg-Dta) (temperature at which when heating a material from ordinary temperature at a temperature rise rate of 20°C/min in a nitrogen atmosphere, a weight of the material is reduced by 5% by weight on the basis of a weight thereof upon initiation of the heating.). Examples of the halogen-containing organic compound include brominated polystyrenes as well as brominated polyphenylene ethers such as polydibromophenylene ether. Among these compounds, in view of remarkable effect of improving a laser marking property, preferred are brominated polyphenylene ethers, and more preferred is polydibromophenylene ether.

The content of the halogen-containing organic compound in the polyamide resin composition is 0.1 to 100 parts by weight on the basis of 100 parts by weight of the polyamide resin. When the content of the halogen-containing organic compound is too small, the effect of improving a laser marking property tends to be insufficient. When the content of the halogen-containing organic compound is too large, the resultant polyamide resin composition tends to be deteriorated in mechanical strength and thermal stability. The content of the halogen-containing organic compound in the polyamide resin composition is preferably 0.5 to 100 parts by weight and more preferably 1 to 60 parts by weight on the basis of 100 parts by weight of the polyamide resin.

The antimony compound used in the present invention is not particularly limited. From the viewpoint of maintaining a good laser marking property even when reducing the amount added to the composition, the antimony compound preferably contains an antimony element in an amount of not less than 10% by weight. Examples of the antimony compound include antimony trioxide, antimony tetraoxide, antimony pentaoxide, etc. These antimony compounds may be subjected to surface treatments from the viewpoints of improving a laser marking property, a mechanical strength, a flame retardance, a fluidity, an appearance, etc., of the polyamide resin composition of the present invention. In particular, among these compounds, antimony trioxide is preferred because of a high effect of improving a laser marking property.

The content of the antimony compound in the polyamide resin composition of the present invention is 0.1 to 100 parts by weight on the basis of 100 parts by weight of the polyamide resin. When the content of the antimony compound is too small, the effect of improving a laser marking property tends to be insufficient. When the content of the antimony compound is too large, the resultant polyamide resin composition tends to be deteriorated in mechanical strength, and further suffer from defects such as increase in specific gravity thereof. The content of the antimony compound in the polyamide resin composition of the present invention is preferably 0.1 to 60 parts by weight and more preferably 1 to 30 parts by weight on the basis of 100 parts by weight of the polyamide resin.

In the present invention, there may be used either the halogen-containing organic compound (hereinafter referred to merely as the "component (b)") or the antimony compound (hereinafter referred to merely as the "component (c)"). However, both the components (b) and (c) are preferably used in combination because the resultant polyamide resin composition is more excellent in mechanical strength, thermal stability and flame retardance as well as can exhibit a smaller specific gravity.

In the present invention, when using both the components (b) and (c) in combination, the weight ratio between the components (b) and (c) in the polyamide resin composition is not particularly limited, and the ratio ((bx)/(cy)) of the content of halogen element in the component (b) ((bx) wt%) to the content of antimony element in the component (c) ((cy) wt%) is preferably in the range of 0.1 to 10. Meanwhile, the polyamide resin composition of the present invention may also contain a black pigment such as carbon black unless the addition of the black pigment adversely affects such an effect of the present invention that when subjecting a molded product obtained from the composition to laser marking, a color tone of a laser-marked portion of the molded product exhibits a darker color than that of a surface of a laser-unirradiated portion of the molded product.

The polyamide resin composition of the present invention preferably contains a reinforcing material to improve a laser marking property thereof. Examples of the reinforcing material include fibrous fillers such as glass fibers, carbon fibers, potassium titanate fibers, metal fibers, ceramic fibers, aramid fibers, PPS fibers, potassium titanate whiskers, calcium carbonate whiskers, aluminum borate whiskers, zonolite, wollastonite and metal fibers; plate-shaped fillers such as plate-shaped glass, talc, kaolin, mica and graphite; amorphous fillers such as calcium carbonate, iron oxide and magnetic powder; circular fillers such as glass beads; hollow fillers such as glass balloons; and ultrafine particle fillers having an average primary particle size of not more than 0.1 µm such as nanocarbon.

In particular, from the viewpoint of totally enhancing properties of the polyamide resin composition of the present invention including not only laser marking property but also rigidity, heat-resisting rigidity and impact resistance, among these reinforcing materials, most preferred are glass fibers. In addition, when it is intended to maintain a good appearance and attain a good rigidity, a low warpage and a good dimensional stability, talc, kaolin and wollastonite are preferably used. When it is intended to improve a tracking resistance of the composition, talc is preferably used. Further, when it is intended to enhance a rigidity of the composition and improve a conductivity thereof, nanocarbon, carbon fibers, metal fibers, etc., are preferably used.

The content of the reinforcing material in the polyamide resin composition of the present invention is usually 1 to 800 parts by weight, preferably 5 to 500 parts by weight, more preferably 5 to 300 parts by weight and still more preferably 5 to 150 parts by weight on the basis of 100 parts by weight of the polyamide resin.

The reinforcing material is preferably subjected to surface treatments with a silane coupling agent, a titanium-based coupling agent, etc. Examples of the surface-treating agent include aminosilane-based agents such as Y-aminopropyl trimethoxysilane, N-β-(aminoethyl)-Y-aminopropyl trimethoxysilane and N-β-(aminoethyl)-Y-aminopropyl dimethoxysilane; epoxysilane-based agents such as Y-glycidoxypropyl trimethoxysilane, Y-glycidoxypropyl triethoxysilane and β-(3,4-epoxycyclohexyl)ethyl trimethoxysilane; and titanium-based coupling agents such as isopropyl-trisstearoyl titanate, isopropyltridecylbenzenesulfonyl titanate and tetraisopropyl-bis(dioctyl phosphite)titanate.

Further, the polyamide resin composition of the present invention may also contain other additives or thermoplastic resins, etc., if required. Examples of the other additives include nucleating agents such as silica; pigments such as zinc sulfide, red iron oxide, cobalt salts and copper salts; dyes such as nigrosine and azine-based dyes; plasticizers such as n-butylene sulfonamide; mold release agents such as higher fatty acid metal salts and higher fatty acid amides; lubricants; heat stabilizers such as copper bromide, copper chloride, copper iodide, potassium iodide and hydrotalcite; antioxidants such as phenol compounds, phosphite compounds and phosphate compounds; ultraviolet light stabilizers such as hindered amines; flame retardants such as melamine polyphosphate, melamine cyanurate, phosphazene, phosphinate metal salts, zinc borate and magnesium hydroxide; foaming agents; and antistatic agents.

Examples of the reins other than the polyamide resin include polyethylene-based resins, polystyrene-based resins, polypropylene-based resins, acrylic resins, polyphenylene ether (PPE) resins, polycarbonate resins, polybutylene terephthalate resins, polyethylene terephthalate resins, polyphenylene ether resins, aramid resins, polyamide imide resins, novolak phenol resins, acrylonitrile-butadienestyrene copolymers (ABS), styrene-ethylene-butene-styrene block terpolymers (SEBS), and elastic polymers such as ethylene-butene rubbers (EBR), ethylene-propylene rubbers (EPR) and ethylene-octene rubbers (EOR). These resins may be modified with various acids or unsaturated groups in order to contemplate a good compatibility with the polyamide resin.

In particular, the polyamide resin composition of the present invention is preferably blended with the thermoplastic resins containing many benzene rings in a main chain thereof such as PPE resins and novolak phenol resins, because the resultant composition can be enhanced in laser marking property. Further, the polyamide resin composition of the present invention is also preferably blended with the elastic polymers modified with maleic anhydride, for example, maleic anhydride-modified ethylene-butene rubbers, because the resultant composition can be remarkably improved in impact resistance. The content of the resins other than the polyamide resin in the polyamide resin composition is usually 1 to 95 parts by weight on the basis of 100 parts by weight of the polyamide resin.

In addition, the polyamide resin composition for laser marking according to the present invention may also contain conventionally known dyes and pigments according to the requirements unless the addition thereof adversely affects the aimed effects of the present invention. When blending the dyes and pigments, the composition may be tinted into an appropriate color ranging from a light color such as white to light gray color up to a dark color such as dark gray color according to the requirements, and further is capable of developing colors corresponding to various wavelengths in a visible light range (wavelength: 380 to 780 nm) such as ivory, red, blue, yellow and brown according to the requirements.

The polyamide resin composition for laser marking according to the present invention may be obtained in the form of a resin composition having a light color, whereby the composition exhibits such a remarkable effect of forming dark color-based markings thereon when subjected to laser marking. Meanwhile, the light color and the dark color are readily determined by measuring the L value (lightness) using a color difference meter. The determination using a color difference meter may be performed by a general method employing an evaluation apparatus according to JIS Z-8722 in which a halogen lamp (C ray; 2°) is used as a light source.

The molded product formed from the polyamide resin composition of the present invention exhibits an excellent laser marking property. Examples of the method for molding the polyamide resin composition to obtain the molded product include extrusion-molding methods such as profile extrusion molding and plane extrusion molding; injection-molding methods such as compression molding, gas-assisted injection molding, injection compression molding, injection press molding insert molding, in-mold molding, local die high-temperature molding (including insulated die molding), two-color molding and sandwich molding; blow molding methods; calender molding methods; and rotational molding methods. Among these molding methods, preferred are injection-molding methods in view of a good productivity.

The shape and surface conditions of the molded products obtained from the polyamide resin composition for laser marking according to the present invention are not particularly limited, and may be appropriately determined according to the applications thereof. Examples of the laser used for the laser marking include carbon dioxide gas laser, Nd-YAG laser, YAG laser, ruby laser, semiconductor laser, argon laser and excimer laser. Among these lasers, from the viewpoint of a good marking property, preferred are Nd-YAG laser and YAG laser.

The wavelength of the laser used is usually 193 to 10600 nm, preferably 532 to 1064 nm and more preferably near 1060 nm. The laser marking rate is usually 1 to 2000 mm/sec and preferably 100 to 1000 mm/sec.

The polyamide resin composition for laser marking according to the present invention can be applied to automobile parts, parts for OA equipments and domestic electrical appliances, and electric or electronic parts. In particular, the polyamide resin composition of the present invention can be suitably applied, as electric or electronic parts, to various switch parts and electric equipment parts such as an outer housing for breakers and internal structural parts, as well as connectors.

### EXAMPLES

The present invention is described in more detail below by Examples. However, it should be noted that the following Examples are only illustrative and not intended to limit the scope of the present invention. Meanwhile, in the following Examples and Comparative Examples, pellets and test pieces were produced from various raw materials described blow and subjected to evaluation tests.

### <(a) Polyamide resin>

(a-1) Polyamide 6 resin: "NOVAMIDE (Registered Trademark) 1010J" (relative viscosity: 2.5) produced by Mitsubishi Engineering-Plastics Corporation.
(a-2) Polyamide 66 resin: "Zytel (Registered Trademark) FE3218" (relative viscosity: 2.8) produced by DuPont Corp.

### <(b) Halogen-containing organic compound>

(b-1) Polydibromophenylene ether: "NP64" (Br content: 64% by weight; 5 wt% weight reduction temperature: 400°C) produced by Inui Corporation.
(b-2) Brominated polystyrene: "PDBS80" (Br content: 72% by weight; 5 wt% weight reduction temperature: 355°C) produced by Great Lakes Chemical Corporation.

### <(c) Antimony-containing compound>

(c-1) Antimony trioxide (Sb₂O₃): "MIC3" (average particle size: 0.6 µm) produced by Morikoku Company, Ltd.

### <(d) Reinforcing material>

(d-1) Glass fiber: "T289H" (average fiber diameter: 10 µm; product surface-treated with a silane coupling agent and an organic binder; dispersed in the form of a fiber having an average fiber length of 150 to 500 µm in a resin composition) produced by Nippon Electric Glass Co., Ltd.
(d-2) Wollastonite (calcium silicate): "Nigloss M3" (average particle size: 2.5 µm; aminosilane-treated product; dispersed in the form of a fiber having an average fiber length of 5 to 70 µm in a resin composition) produced by Nico Inc.

### <(e) Other additives>

(e-1) Titanium oxide: "Tiepake CR60" (average particle size: 0.2 µm; main component of the surface-treating agent: aluminum; volatile content: 0.2% by weight) produced by Ishihara Sangyo Kaisha, Ltd.
(e-2) Carbon black: "#40" (primary particle size: 24 nm; DBP absorption: 115 cm³/100 g; nitrogen adsorption specific surface area: 115 cm²/g) produced by Mitsubishi Chemical Corporation.
(e-3) Elastic polymer (maleic anhydride-modified ethylene-butene-1 copolymer): "MODIC AP730T" produced by Mitsubishi Chemical Corporation.
(e-4) Mold release agent (calcium stearate): "Calcium Stearate S" produced by NOF Corporation.

### <Method for producing polyamide resin pellets and test pieces>

The respective raw materials were weighed and mixed with each other using a tumbler mixer. The resultant mixture was charged at one time from a main hopper into a twin-screw extruder "TEX 30C Model" manufactured by Japan Steel Works, Ltd., and melt-kneaded therein at a cylinder temperature of 275°C and a screw rotating speed of 200 rpm, thereby producing a polyamide resin composition in the form of pellets. Meanwhile, when adding the component (d) into the composition, the components (a), (b) and (c) were charged at one time from the main hopper into the extruder, and the component (d) was subsequently side-fed into the extruder during the melt-kneading.

The thus obtained pellets were dried using a vacuum dryer at 120°C for 8 to 12 hr and then molded to produce a test piece for evaluation of laser marking. The molding of the test piece was conducted using a molding machine "Sumitomo SH100" and a mold for a flat plate test piece having a size of 100 mm x 100 mm x 3 mm under the following conditions: molding temperature (cylinder temperature): 275°C; mold temperature: 80°C; injection/dwell time: 15 sec; cooling time: 20 sec; filling time: 0.7 sec.

Also, the molding of the test piece for evaluation of elastic modulus and Charpy impact test was conducted using a molding machine "FANAC 100" and a mold for ISO test piece under the following conditions: molding temperature (cylinder temperature): 275°C; mold temperature: 80°C; injection/dwell time: 20 sec; cooling time: 20 sec; filling time: 2 sec. Meanwhile, in the following descriptions, the above test piece for evaluation of elastic modulus and Charpy impact test and the previous test piece for evaluation of laser marking are occasionally totally referred to merely as the "test piece".

### (1) Color tone and L value of material:

The color tone of the polyamide resin composition (hereinafter occasionally referred to merely as the "material") was determined by visual observation thereof. The L value of the test piece prepared from the composition before subjected to laser marking treatment was measured under the following conditions. That is, using a color difference meter "SE-2000" (according to JIS Z-8722) manufactured by Nippon Denshoku Industries Co., Ltd., as an evaluation apparatus and a halogen lamp (C ray; 2°) as a light source, the L value of a 10 mmφ area of the test piece was measured. Also, a standard white plate was used as a backing plate for fixing the test piece. The larger L value indicates a color tone having a higher lightness (lighter color).

### (2) Method for evaluating laser marking property:

The laser marking property was evaluated by subjecting the test piece to laser marking procedure using Nd-YAG laser under the conditions shown in Table 1 below. Different marking patterns were respectively formed on two plates in which a solid pattern of a square shape having a size of 20 x 20 mm was marked on one of the plates, whereas total 10 alphabetical characters (ABCDEFGHIJ) each having a font size of 5 mm were marked on the other plate.

**Table 1**

| Apparatus | "MARKER ENGINE SL475H/HF" manufactured by NEC corporation. |
|---|---|
| Maximum output power | 50 W or more |
| Laser marking output current | 10 A or 15 A |
| Oscillation wavelength | 1060 nm |
| Ultrasonic wave Q switch | 2 KHz |
| Scanning speed | 200 mm/sec |

The laser marking property was totally evaluated by visually observing the laser-marked two plates and classifying the observation results into Ranks A to C according to the evaluation criteria shown in Table 2.

**Table 2**

| | |
|---|---|
| A | Extremely clear markings were produced; good result |
| B | Marked patterns were recognizable, but unclear |
| C | No markings were produced, or marked patterns were hardly recognizable. |

In addition, the laser marking property of the light color-based material (contrast of laser-marked portions) was determined by digitalizing the degree of color change from the original color of the material due to the laser marking treatment. More specifically, the material was subjected to laser marking treatment to form a solid square pattern having a size of 20 mm x 20 mm thereon, and the laser marking property was evaluated by calculating the difference between L values thereof before and after the laser marking treatment [(L value before irradiation with laser) - (L value after irradiation with laser)]. When the difference is a positive number, it is indicated that the laser-marked portion of the material was discolored into a darker color than the original color of the material. Whereas, when the difference is a negative number, it is indicated that the laser-marked portion of the material was discolored into a lighter color than the original color of the material. Also, the larger absolute value of the difference between the L values clearly indicates such a tendency that the visibility of the laser markings produced was more excellent.

### (3) Elastic modulus:

According to ISO 178, the elastic modulus was measured under an absolute dry condition at 23°C using an "Autograph" manufactured by Shimadzu Seisakusho Co., Ltd. The unit of the elastic modulus is "MPa".

### (4) Charpy impact strength (notched):

According to ISO 179-1/2, the Charpy impact strength was measured under an absolute dry condition at 23°C using a Charpy impact tester manufactured by Toyo Seiki Co., Ltd. The unit of the Charpy impact strength is "kJ/m²".

### Examples 1 to 29 and Comparative Examples 1 and 2:

The respective components were weighed in amounts shown in Tables 3 to 9, and the test piece was produced from these components and evaluated by the above methods. The results are shown in Tables 3 to 9. The units of the amounts of the respective components blended all are "part(s) by weight".

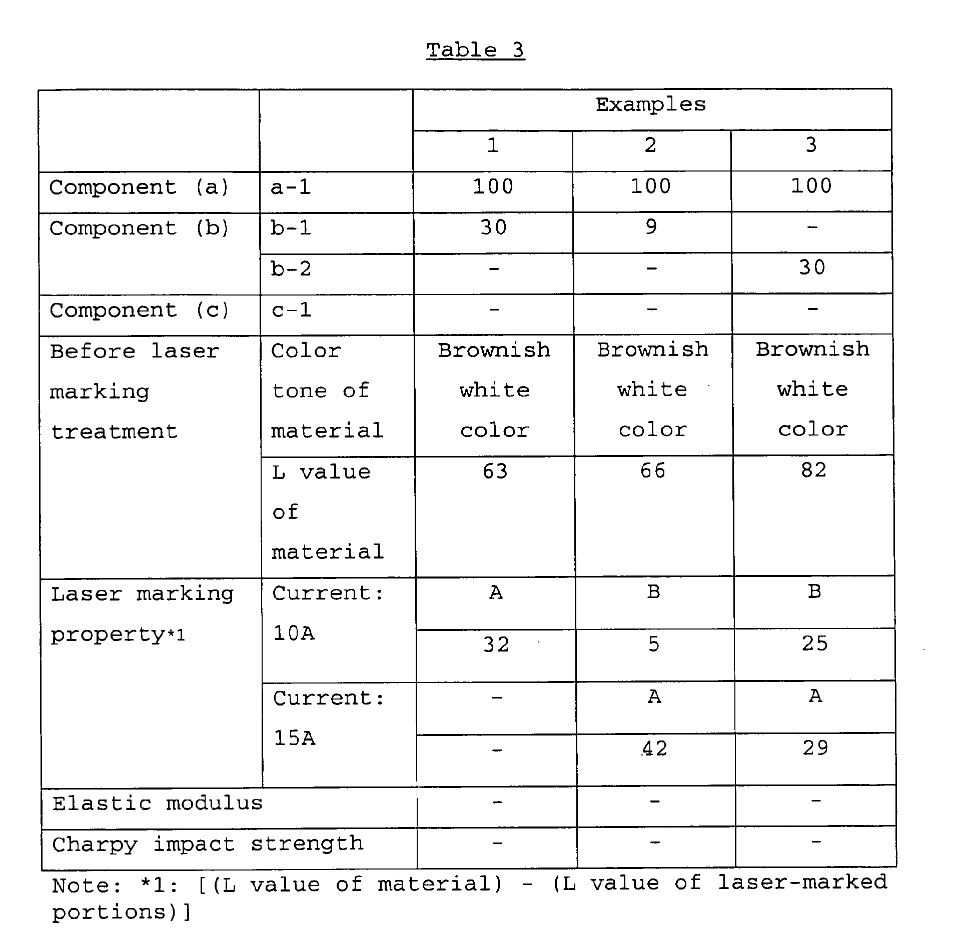

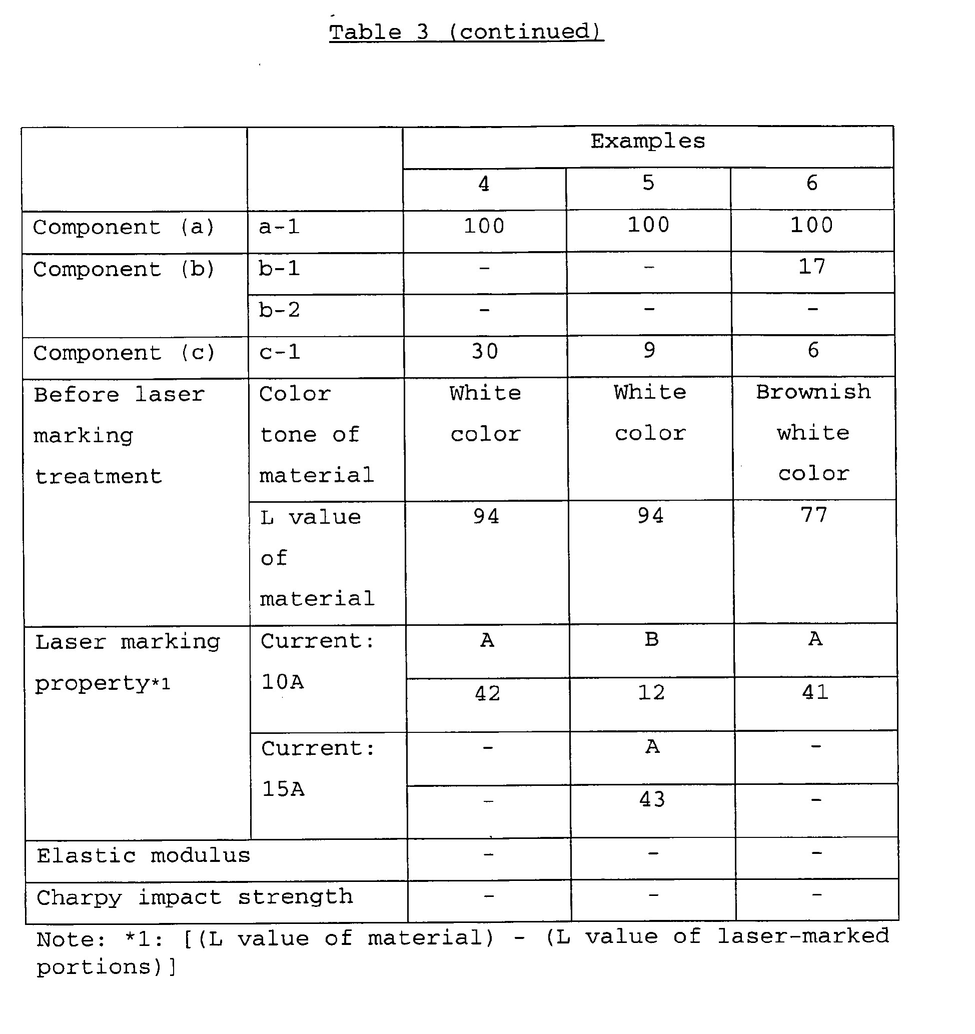

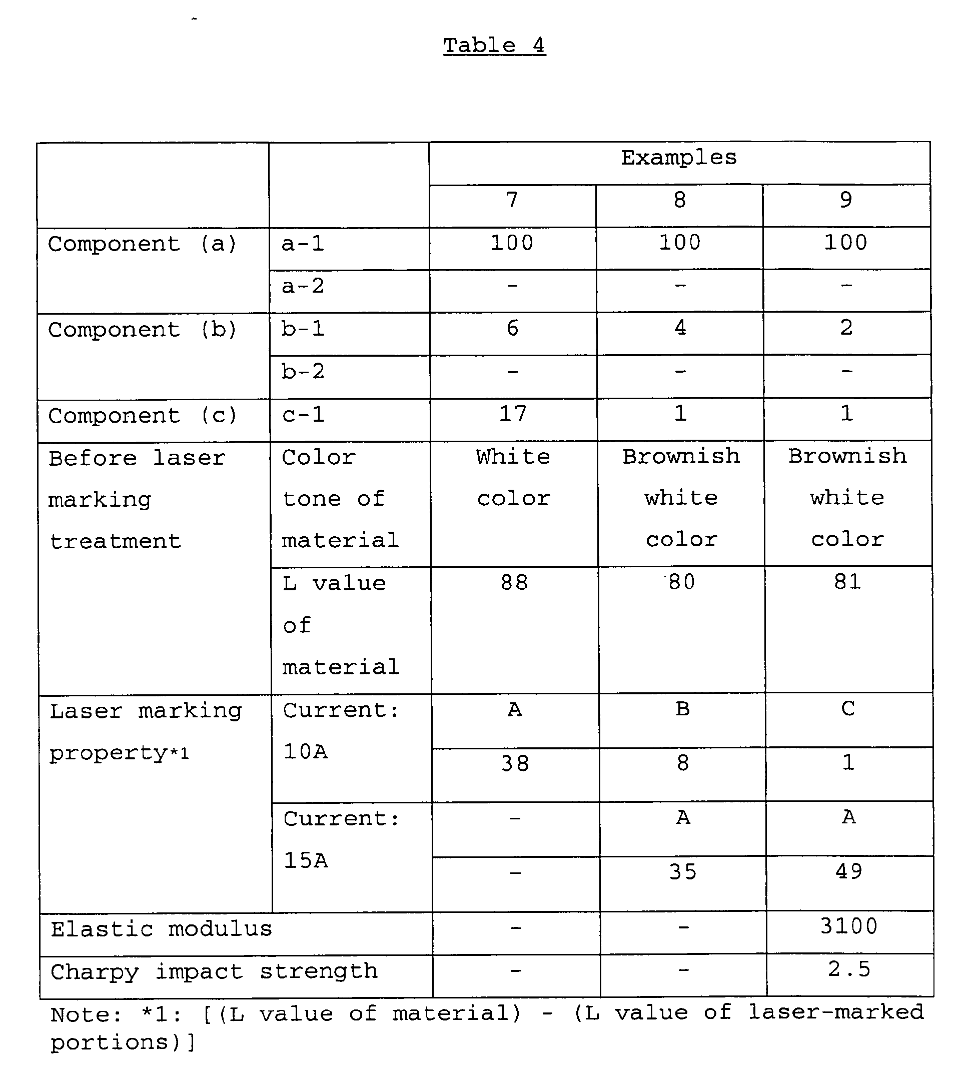

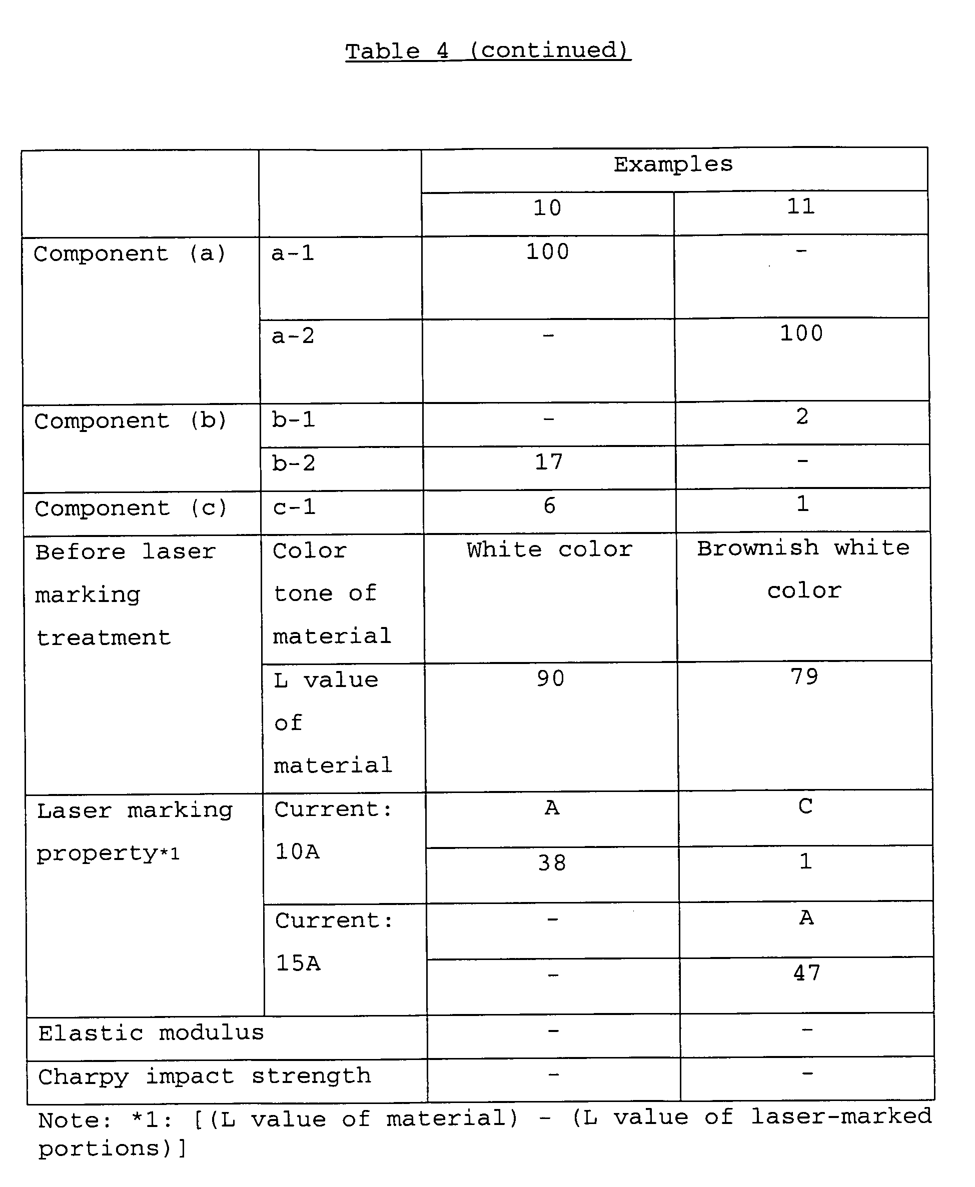

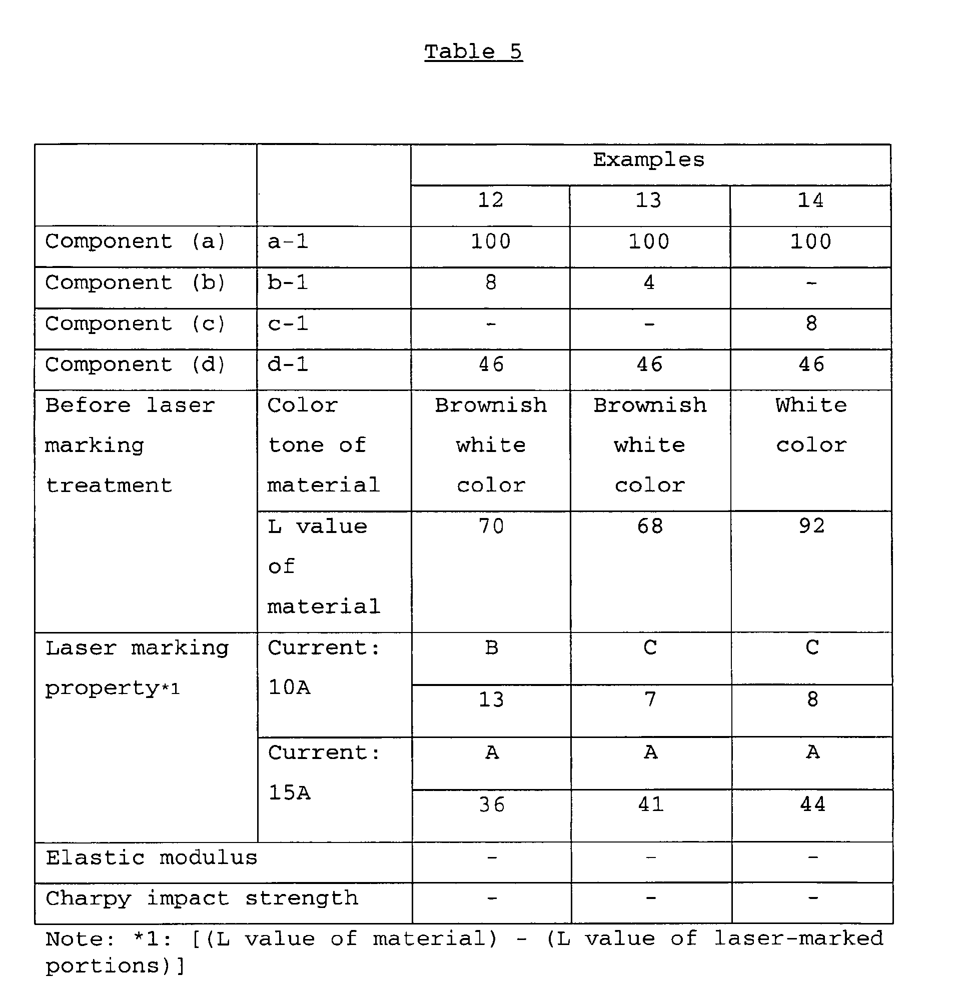

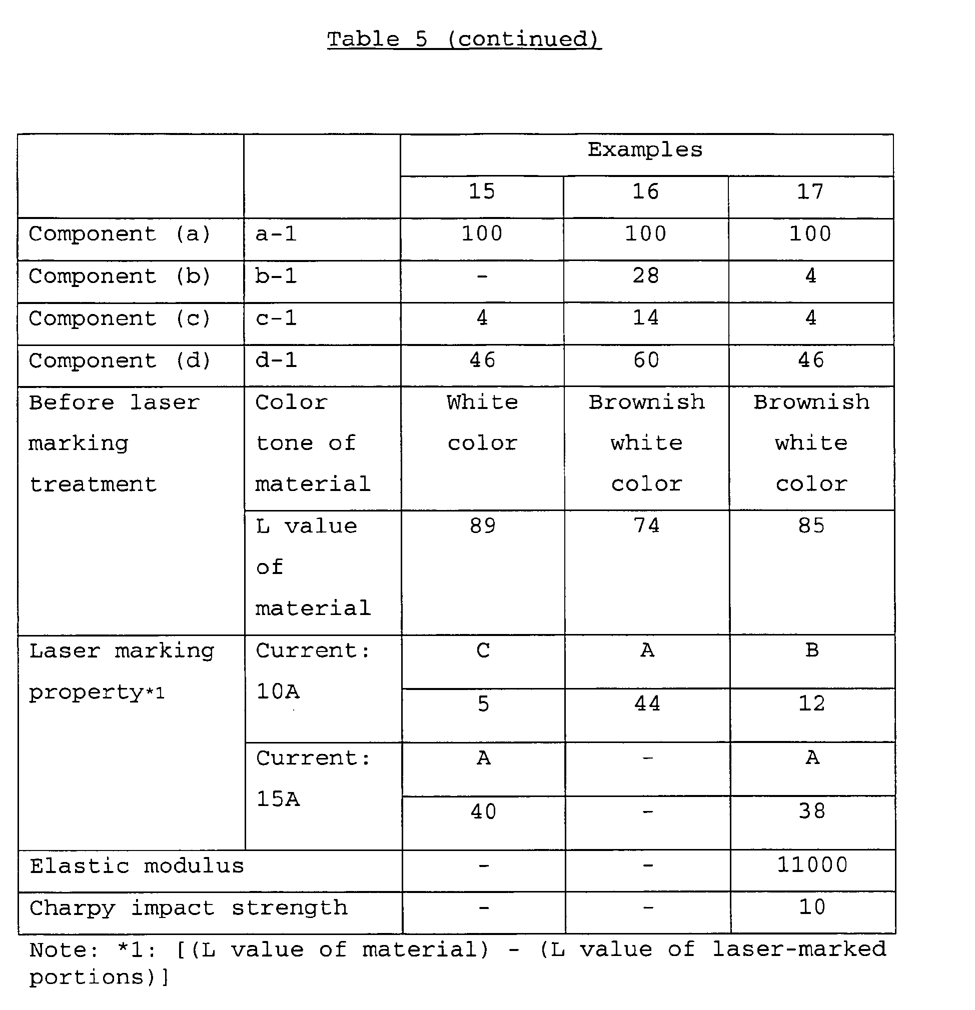

**Table 6**

| | | Examples | | | |
|---|---|---|---|---|---|
| | | 18 | 19 | 20 | 21 |
| Component (a) | a-1 | - | 100 | 100 | 100 |
| | a-2 | 100 | - | - | - |
| Component (b) | b-1 | 4 | 4 | 4 | 4 |
| Component (c) | c-1 | 4 | 4 | 4 | 4 |
| Component (d) | d-1 | 46 | - | 46 | 46 |
| | d-2 | - | 46 | - | - |
| Component (e) | e-1 | - | - | 2 | - |
| | e-2 | - | - | - | - |
| | e-3 | - | - | - | 10 |
| Before laser marking treatment | Color tone of material | Brownish white color | Brownish white color | White color | Brownish white color |
| | L value of material | 84 | 76 | 90 | 86 |
| Laser marking property*1 | Current: 10A | B | B | A | B |
| | | 12 | 13 | 36 | 10 |
| | Current: 15A | A | A | - | A |
| | | 40 | 41 | - | 35 |
| Elastic modulus | | - | - | - | 9000 |
| Charpy impact strength | | - | - | - | 16 |

| | | | | | |
|---|---|---|---|---|---|
| Note: *1: [(L value of material) - (L value of laser-marked portions)] | | | | | |

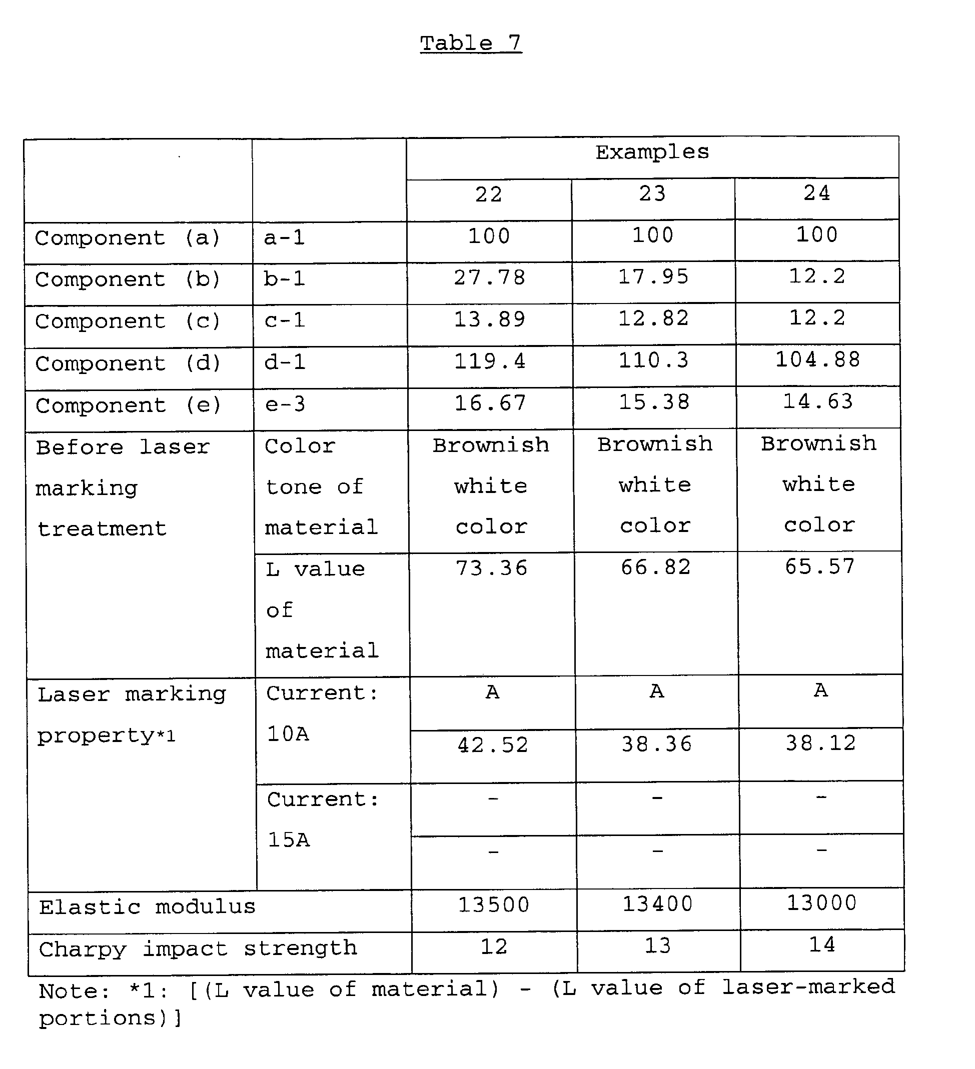

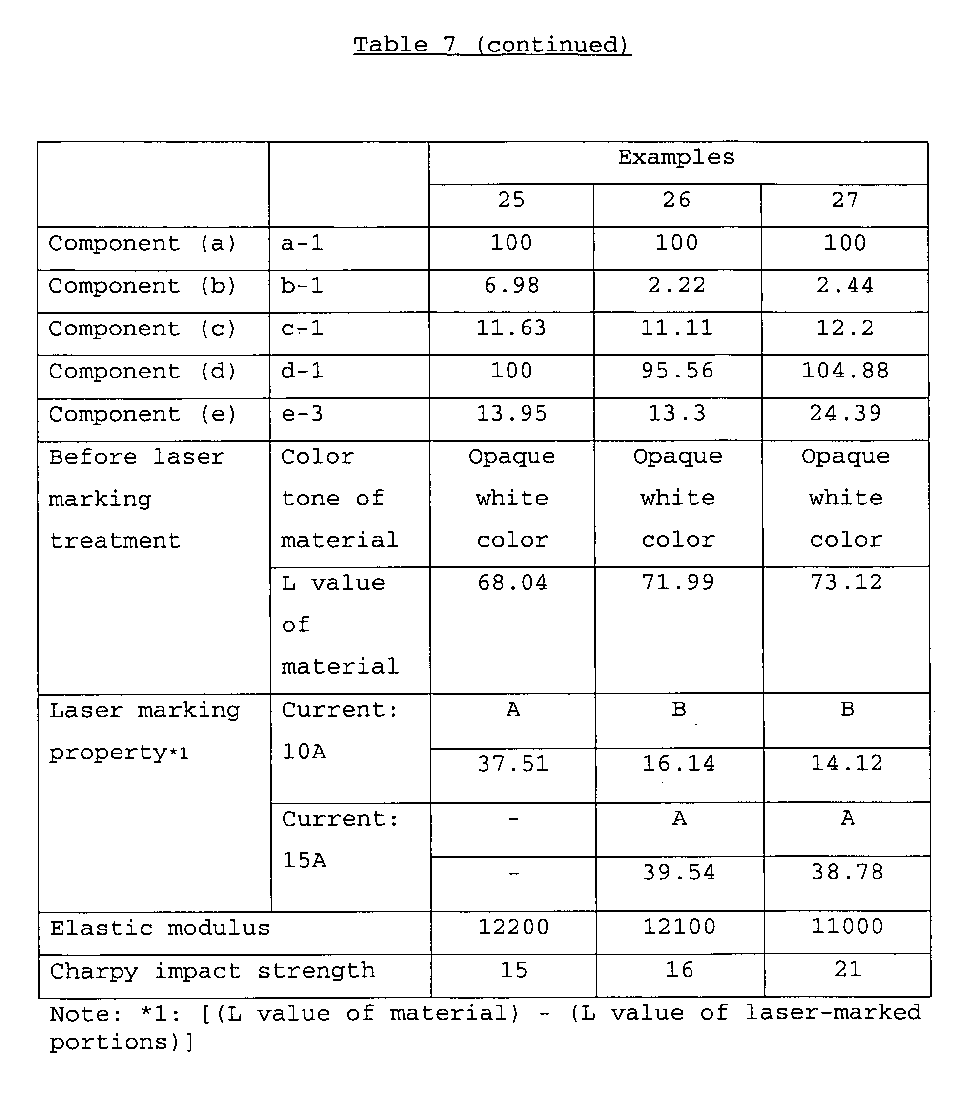

**Table 8**

| | | Examples | |
|---|---|---|---|
| | | 28 | 29 |
| Component (a) | a-1 | 100 | 100 |
| Component (b) | b-1 | 2.22 | 2.44 |
| Component (c) | c-1 | 11.11 | 12.2 |
| Component (d) | d-1 | 95.56 | 104.88 |
| Component (e) | e-1 | 0.194 | 0.213 |
| | e-2 | 0.0047 | 0.0051 |
| | e-3 | 13.3 | 24.39 |
| Before laser marking treatment | Color tone of material | Gray color | Gray color |
| | L value of material | 58.57 | 59.12 |
| Laser marking property*1 | Current: 10A | A | A |
| | | 32.66 | 32.12 |
| | Current: 15A | - | - |
| | | - | - |
| Elastic modulus | | 12300 | 10500 |
| Charpy impact strength | | 11 | 16 |

| | | | |
|---|---|---|---|
| Note: *1: [(L value of material) - (L value of laser-marked portions)] | | | |

**Table 9**

| | | Comparative Examples | |
|---|---|---|---|
| | | 1 | 2 |
| Component (a) | a-1 | 100 | 100 |
| Component (d) | d-1 | - | 46 |
| Component (e) | e-4 | 0.05 | - |
| Before laser marking treatment | Color tone of material | Opaque white color | Opaque white color |
| | L value of material | 79 | 60 |
| Laser marking property*1 | Current: 10A | C | C |
| | | 0 | 0 |
| | Current: 15A | C | C |
| | | 1 | 8 |
| Elastic modulus | | 2800 | 9.3 |
| Charpy impact strength | | 3 | 12 |

| | | | |
|---|---|---|---|
| Note: *1: [(L value of material) - (L value of laser-marked portions)] | | | |

As apparently recognized from the above Tables, in Example 1 in which the components (a-1) and (b-1) were blended in amounts shown in Table 1, the color of the material was a slightly brownish white color. When subjecting the material to laser marking treatment, it was possible to form extremely clear markings thereon even at a current of 10A. As to the color tone of the laser-marked portions, since the difference value obtained by subtracting the lightness of the portions after the laser marking treatment from that before the laser marking treatment was a positive number, and an absolute value of the difference value was large, it was confirmed that the laser-marked portions were tinted into a darker color than the original color of the material, and the color was developed with a high contrast.

In Example 2 in which the amount of the component (b) blended was reduced as compared to that used in Example 1, it was confirmed that although the obtained composition failed to attain clear markings at a current of 10 A, extremely good markings were produced thereon by increasing the current to 15 A.

In Example 3 in which the kind of the component (b) used in Example 1 was changed to different one, it was confirmed that although the obtained composition failed to attain clear markings at the same current of 10 A as used in Example 1, extremely good markings similar to those of Example 1 were produced thereon by increasing the current to 15 A.

In Examples 4 and 5 in which the components (a-1) and (c-1) were blended in the composition, it was confirmed that the color tone of the obtained composition was a white color having an extremely high lightness, and extremely good markings similar to those of Example 1 were produced thereon.

In Examples 6 to 10 in which the component (a-1), the component (b-1) or (b-2) and the component (c-1) were blended in the composition, it was confirmed that the obtained composition was capable of producing good markings similar to those of Example 1 thereon at a current of either 10 A or 15 A. Meanwhile, in Example 9, the elastic modulus and the Charpy impact strength of the composition were also evaluated. As a result, it was confirmed that the non-reinforced polyamide resin material had a good quality sufficient to be applicable to various kinds of products.

In Examples 12 to 19 in which the component (d) was further blended in addition to the component (a), the component (b) and/or the component (c), it was confirmed that the resultant composition was capable of producing good markings similar to those of Example 1 thereon at a current of either 10 A or 15 A.

Meanwhile, in Example 17, the elastic modulus and the Charpy impact strength of the composition were also evaluated. As a result, it was confirmed that both the elastic modulus and the Charpy impact strength of the composition were increased as compared to those of the composition of Example 9 containing no component (d), and the reinforced polyamide resin composition had a good quality sufficient to be used in various industrial application fields.

In Example 20 in which the white pigment was further blended in the resin composition to enhance a whiteness thereof, it was confirmed that the resultant composition was capable of producing good markings similar to those of Example 1 thereon. In Examples 21 to 29 in which the elastic polymer was further blended in the composition to enhance an impact strength thereof, it was confirmed that the resultant composition was capable of producing good markings similar to those of Example 1 thereon at a current of either 10 A or 15 A. Further, it was also confirmed that these compositions were enhanced in impact value as compared to the composition of Example 17 containing no elastic polymer.

Ina addition, in Examples 28 and 29 in which the content ratio of the component (b) to the component (c) was reduced, and the content of the component (b) was decreased up to about a half of the amount used in the previous Examples, it was confirmed that the compositions also exhibited a good laser marking property only by adding a very small amount of carbon black thereto.

In Comparative Examples 1 and 2 in which either the component (b) or the component (c) was excluded from the composition, it was confirmed that the resultant composition failed to produce good markings thereon.

Thus, the polyamide resin composition of the present invention is capable of producing clear markings thereon by subjecting the composition to laser marking treatment, and, therefore, extremely useful as a material for molded products to be subjected to laser marking. The molded product subjected to the laser marking treatment can be extensively used in various industrial application fields including not only electric and electronic parts such as breakers and connectors but also automobile parts and parts of sundries.

## Claims

1. A polyamide resin composition for laser marking, comprising 100 parts by weight of a polyamide resin and 0.1 to 100 parts by weight of a halogen-containing organic compound and/or an antimony compound, wherein when subjecting a molded product obtained from the composition to laser marking, a color tone of a laser-marked portion of the molded product exhibits a darker color than that of a surface of a laser-unirradiated portion of the molded product.

2. A polyamide resin composition according to claim 1, wherein the composition contains 0.5 to 100 parts by weight of the halogen-containing organic compound and 0.1 to 60 parts by weight of the antimony compound on the basis of 100 parts by weight of the polyamide resin.

3. A polyamide resin composition according to claim 1 or 2, wherein not less than 50% of a halogen atom contained in the halogen-containing organic compound is a bromine atom, and the halogen-containing organic compound has a 5 wt% thermal weight reduction temperature of not lower than 300°C.

4. A polyamide resin composition according to any one of claims 1 to 3, wherein the antimony compound is antimony trioxide.

5. A polyamide resin composition according to any one of claims 1 to 4, wherein the polyamide resin is an aliphatic polyamide resin containing polyamide 6 or polyamide 66 as a main constitutional unit.

6. A polyamide resin composition according to any one of claims 1 to 5, wherein the halogen-containing organic compound is selected from brominated polyphenylene ethers.

7. A polyamide resin composition according to any one of claims 1 to 6, further comprising a reinforcing material in an amount of 1 to 1000 parts by weight on the basis of 100 parts by weight of the polyamide resin.

8. A polyamide resin molded product obtained by molding the polyamide resin composition for laser marking as defined in any one of claims 1 to 7 on which laser markings are provided by irradiating the molded product with a laser.

9. An electric equipment part comprising the polyamide resin molded product as defined in claim 8.
